# FASCICULE DE BREVET EUROPEEN

(11) **EP 3 172 504 B1**
(45) Date de publication et mention de la délivrance du brevet: **14.04.2021**
(21) Numéro de dépôt: 15745170.9
(22) Date de dépôt: 21.07.2015
(51) Int. Cl.: F25B 30/04, F25B 33/00, F25B 35/02

(54) **DISPOSITIF DE POMPE À CHALEUR À ABSORPTION GAZ COMPORTANT UNE ÉVACUATION DES FUMÉES DE COMBUSTION VERS UN EVAPORATEUR**
ABSORPTIONSWÄRMEPUMPENVORRICHTUNG MIT FÜHRUNG DER VERBRENNUNGABGASE ZU EINEM VERDAMPFER
ABSORPTION HEAT PUMP DEVICE INCLUDING DISCHARGE OF THE COMBUSTION FUMES TO AN EVAPORATOR

(30) Priorité: 24.07.2014 FR 1457155
(43) Date de publication de la demande: 31.05.2017
(73) Titulaire: Commissariat à l'Énergie Atomique et aux Énergies Alternatives, 75015 Paris (FR)
(72) Inventeur: BOUDEHENN, François, 07190 Saint Sauveur de Montagut (FR); PAPILLON, Philippe, 73000 Chambéry (FR)
(74) Mandataire: Brevalex
(86) Numéro de dépôt international: PCT/EP2015/066620
(87) Numéro de publication internationale: WO 2016/012436

(56) Documents cités:
- WO-A1-2010/129949
- DE-A1- 2 648 855

## Description

### DOMAINE TECHNIQUE

La présente invention se rapporte au domaine général des pompes à chaleur, et en particulier au domaine des pompes à chaleur à absorption utilisant une source chaude au générateur par chaudière gaz. Ce type de pompe à chaleur est également désigné par l'expression « pompe à chaleur à absorption à générateur gaz » ou encore plus simplement par l'expression « PAC à absorption à moteur gaz ».

L'invention trouve par exemple des applications pour la production d'eau chaude sanitaire (ECS), le chauffage et/ou la climatisation. Elle peut ainsi être appliquée à tout type de bâtiment présentant des besoins en termes de chauffage, de production d'eau chaude sanitaire et/ou de climatisation, et par exemple à des habitats individuels ou collectifs, ou encore des bâtiments tertiaires tels que des bureaux ou des hôpitaux, entre autres.

L'invention propose ainsi un dispositif de pompe à chaleur à absorption gaz comportant des moyens d'évacuation des fumées de combustion du générateur gaz au niveau de l'évaporateur.

### ÉTAT DE LA TECHNIQUE ANTÉRIEURE

Parmi les technologies connues utilisant le gaz pour le chauffage, la production d'eau chaude sanitaire et éventuellement la climatisation, par exemple, les pompes à chaleur à absorption à générateur gaz occupent une place privilégiée. Par exemple, les documents WO 2010/129949 A1 et DE 26 48 855 A1 divulguent chacun un dispositif de pompe à chaleur à absorption gaz selon le préambule de la revendication 1.

En effet,
de telles PAC à absorption à moteur gaz peuvent permettre d'atteindre un niveau de performance nettement supérieur à celui des chaudières au gaz traditionnelles, permettant notamment une économie d'énergie de 30 à 40 %. Ainsi, dans le contexte actuel de l'accroissement de l'efficacité énergétique, dans le bâtiment notamment, ces pompes présentent un intérêt grandissant, et en particulier pour le marché de la rénovation.

Une PAC à absorption à moteur gaz est avant tout, selon le principe général d'une pompe à chaleur, un dispositif thermodynamique permettant de transférer la chaleur d'un milieu froid (le refroidissant donc encore) vers un milieu chaud (le chauffant donc davantage).

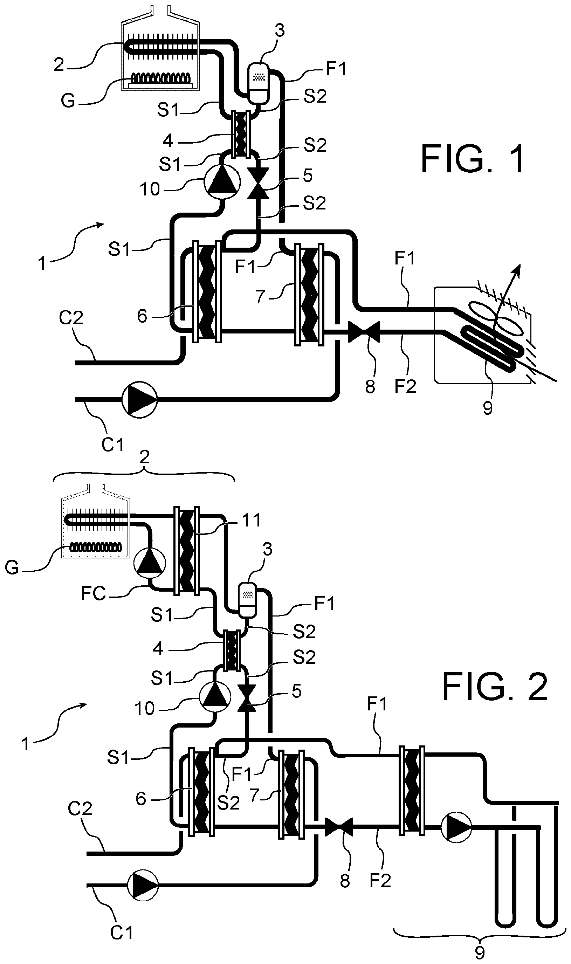

Les figures 1 et 2 illustrent de façon schématique deux variantes du principe général de fonctionnement d'une PAC à absorption à moteur gaz.

Tout comme pour une pompe à chaleur classique, une PAC à absorption à moteur gaz comporte un fluide réfrigérant (ou frigorigène) dont on provoque les changements d'état pour qu'il prenne ou cède principalement sa chaleur latente à l'endroit souhaité.

Toutefois, dans le cas d'une PAC à absorption à moteur gaz, le fluide réfrigérant est associé à un sorbant, ces deux éléments formant un couple.

Le sorbant a pour objectif de pouvoir absorber le fluide réfrigérant à une certaine température et à une certaine pression, et de pouvoir le désorber, c'est-à-dire le libérer, à d'autres températures et pressions.

Dans le cas où le sorbant est un solide, on parle d'adsorption. Le couple le plus fréquemment utilisé est eau/zéolithe. Dans le cas où le sorbant est un liquide, on parle d'absorption. Parmi ces deux familles de système à sorption, il est à noter que la technologie à absorption est la plus performante. Dans ce cas, les couples les plus fréquemment utilisés sont ammoniac/eau et eau/bromure de lithium. Toutefois, compte-tenu de l'utilisation de températures élevées au niveau du générateur et d'une source de chaleur froide à l'évaporateur (air extérieur ou sol en hiver, par exemple), le couple réfrigérant/absorbant privilégié est ammoniac/eau. En effet, pour le couple eau/bromure de lithium, l'eau est utilisée en tant que fluide réfrigérant et limite le fonctionnement de la pompe à chaleur au niveau de l'évaporateur car le point triple de l'eau à 0°C ne permet pas le fonctionnement pour des températures d'air inférieures à 5°C.

En référence aux figures 1 et 2, le principe général de fonctionnement de la PAC à absorption à moteur gaz 1 est le suivant. Au sein d'un générateur 2, la chaleur issue de la combustion du gaz G est utilisée pour faire désorber le fluide réfrigérant d'une solution absorbante riche S1 (i.e. riche en fluide réfrigérant). La solution riche S1 peut être directement réchauffée dans le générateur 2 à gaz, comme pour l'exemple de la figure 1, ou bien encore indirectement par l'intermédiaire d'un fluide caloporteur FC et d'un échangeur de chaleur 11, comme pour l'exemple de la figure 2. A la sortie du générateur 2, on obtient alors un fluide diphasique, comportant d'une part une solution pauvre S2 (i.e. pauvre en réfrigérant) et d'autre part un fluide réfrigérant gazeux F1.

Ce mélange diphasique est séparé par gravité par le biais d'un séparateur 3. La solution pauvre S2 retourne alors vers un absorbeur 6, après avoir traversé un échangeur de récupération de chaleur 4 et un détendeur solution 5. Le fluide réfrigérant gazeux F1 est quant à lui condensé dans un condenseur 7 à la sortie duquel on obtient alors un fluide réfrigérant liquide F2. Ce fluide réfrigérant liquide F2 est ensuite détendu dans un détendeur solution 8, puis évaporé à basse pression dans un évaporateur 9. Au niveau de cet évaporateur 9, la chaleur nécessaire à l'évaporation peut être prise sur l'air extérieur, comme pour l'exemple de la figure 1, ou bien encore dans le sous-sol par l'intermédiaire de forages géothermiques, comme pour l'exemple de la figure 2. On parle alors respectivement de PAC à absorption à moteur gaz air/eau (ou encore aérothermique) et de PAC à absorption à moteur gaz eau/eau (ou encore géothermique).

A la sortie de l'évaporateur 9, le fluide réfrigérant est de nouveau un fluide réfrigérant gazeux F1. Il est alors envoyé vers l'absorbeur 6 dans lequel il est remis au contact de la solution pauvre S2 en provenance du générateur 2. La solution pauvre S2 se charge alors en fluide réfrigérant en absorbant la vapeur. De cette façon, à la sortie de l'absorbeur 6, on obtient la solution riche S1 qui est renvoyée vers le générateur 2 par l'intermédiaire d'une pompe à solution 10.

Dans ce principe de fonctionnement de la PAC à absorption à moteur gaz 1, la condensation du fluide réfrigérant gazeux F1 dans le condenseur 7 et son absorption par la solution pauvre S2 dans l'absorbeur 6 permettent respectivement de dégager de la chaleur pour le départ d'eau C2 et le retour d'eau C1 d'un circuit de chauffage.

Par ailleurs, l'évaporation du fluide réfrigérant liquide F2 dans l'évaporateur 9 peut permettre de produire du froid, évacué par exemple dans l'air extérieur (cas de la figure 1) ou dans le sol par le biais de sondes géothermiques (cas de la figure 2). Le froid ainsi produit peut le cas échéant être utilisé au niveau d'un bâtiment pour des applications de climatisation.

Actuellement, les technologies connues de PAC à absorption à moteur gaz, commercialisées ou non, peuvent ainsi être classées en deux catégories principales.

Premièrement, les PAC à absorption à moteur gaz aérothermiques utilisant la chaleur de l'air extérieur (cas de la figure 1), installées à l'extérieur des bâtiments, peuvent permettre de disposer d'un appareil monobloc, l'inconvénient majeur en étant que les équipements sont soumis aux contraintes de l'environnement extérieur (température, humidité, vent, entre autres) impactant à la fois le coût de la solution technique (protection anti-pluie/anti-humidité des composants électriques, par exemple) et la performance énergétique (pertes thermiques plus élevées notamment au niveau du générateur).

Deuxièmement, les PAC à absorption à moteur gaz géothermiques utilisant la chaleur du sol avec des forages (cas de la figure 2), installées à l'intérieur des bâtiments, peuvent permettre de répondre au moins partiellement aux inconvénients mentionnés précédemment mais induisent un coût élevé compte-tenu de la nécessité de disposer de forages géothermiques.

En outre, comme indiqué précédemment, les technologies de PAC à absorption à moteur gaz ont tendance à privilégier comme couple réfrigérant/absorbant, le couple ammoniac/eau. Or, il s'avère nécessaire de pouvoir respecter la réglementation en vigueur concernant l'utilisation de l'ammoniac dans des lieux d'occupation générale (norme NF EN 378), laquelle est très contraignante. En particulier, il est à noter qu'en dessous de 2,5 kg d'ammoniac, aucune contrainte n'est imposée si ce n'est que le système doit être scellé. En revanche, au-dessus de 2,5 kg d'ammoniac, la charge maximale doit être inférieure ou égale à la limite pratique (0,00035 kg/m³) multipliée par le volume de la salle, ou il doit exister une sortie à l'air libre et aucune communication directe avec des salles pour certaines classes d'occupation. D'ailleurs, même en dessous de 2,5 kg d'ammoniac, la crainte de l'ammoniac entraîne des difficultés d'acceptation pour installer ces équipements à l'intérieur de locaux.

Par ailleurs, plusieurs exemples de PAC à absorption à moteur gaz ont également été décrits dans la littérature brevet. Ainsi, par exemple, la demande internationale WO 2010/129949 A1 concerne une machine à absorption utilisée comme pompe à chaleur couplée avec un brûleur gaz, sans aucune récupération de chaleur au niveau des fumées. La demande de brevet allemand DE 33 38 126 A1 décrit un générateur de machine à absorption présentant une architecture particulière pour une alimentation par brûleur gaz, optimisé pour maximiser l'échange entre le brûleur et le générateur sans récupération de chaleur additionnelle. La demande de brevet canadien CA 2 061 323 A1 divulgue quant à elle une pompe à chaleur dont le fonctionnement est basé sur l'utilisation d'un cycle GAX (pour « Generator Absorber heat eXchanger» en anglais). Enfin, la demande de brevet chinois CN 2013-55123 Y concerne une géométrie particulière d'un échangeur de récupération de chaleur sur les fumées.

Néanmoins, les solutions technologiques décrites précédemment, en particulier en référence aux figures 1 et 2, pour la conception d'une PAC à absorption à moteur gaz ne sont pas entièrement satisfaisantes. En effet, ces solutions de pompes à chaleur, majoritairement conçues pour être en extérieur, ne s'avèrent pas adaptées au contexte énergétique actuel qui cherche à valoriser au mieux l'utilisation d'une énergie fossile et donc à prévoir la récupération de chaleur afin d'augmenter les rendements du système énergétique. De plus, l'intégration de solutions technologiques de PAC à absorption à moteur gaz autre qu'en extérieur, en particulier dans des composants pour l'habitat ou le bâtiment, n'a été que très faiblement envisagée et n'est ainsi pas optimale.

En outre, ces solutions connues de l'art antérieur ne permettent pas de répondre de manière satisfaisante aux différentes problématiques liées à la technologie de PAC à absorption à moteur gaz.

Tout d'abord, il existe une problématique liée à l'utilisation d'air extérieur. En effet, un cycle à absorption fonctionne typiquement selon trois niveaux de température, à savoir : une température de source chaude au générateur entre environ 50 et 200°C, une température de source intermédiaire à l'absorbeur et au condenseur entre environ 20 et 50°C, et une température de source froide à l'évaporateur entre environ -20 et 20°C. Les performances du cycle à absorption augmentent lorsque les températures des sources chaude et froide augmentent alors que la température de la source intermédiaire diminue, et inversement. Aussi, pour une PAC à absorption à moteur gaz utilisant de l'air, et en particulier de l'air extérieur, plus la température de cet air (notamment la température extérieure) sera faible, plus les performances de la pompe seront faibles, alors que dans le même temps les besoins en chauffage augmentent.

Par ailleurs, il existe une problématique liée à la valorisation maximale de la combustion du gaz. En effet, la combustion du gaz produit de la chaleur à une température suffisante, par exemple de l'ordre de 80 à 800°C (température de la flamme fonction de l'architecture du brûleur), pour alimenter le cycle à absorption au niveau du générateur. A la sortie du générateur, la température des fumées de combustion, qui comportent principalement de l'eau, de l'azote et du dioxyde de carbone, reste suffisamment élevée pour être valorisée, ce qui peut se faire alors par exemple par le biais d'une chaudière à condensation permettant de condenser la vapeur d'eau contenue dans les fumées avant de rejeter l'eau sous forme liquide. Toutefois, une fois cette condensation effectuée, la température des fumées de combustion reste encore suffisamment élevée pour être valorisée.

De plus, il existe une problématique liée à l'installation de la PAC à absorption à moteur gaz. En effet, pour permettre leur bon fonctionnement, les PAC à absorption à moteur gaz utilisant l'air extérieur nécessitent à la fois une arrivée d'air neuf au générateur par chaudière gaz et le rejet du froid produit à l'évaporateur dans l'air extérieur. Ces deux conditions peuvent complexifier l'installation des PAC à absorption à moteur gaz, en particulier dans la mise en place de la prise d'air extérieur ou de la connexion avec une unité située en extérieur, pouvant être effectuée directement avec le réfrigérant ou par le biais d'un fluide intermédiaire. L'utilisation d'un fluide intermédiaire peut toutefois diminuer les performances de la pompe en ajoutant des pincements d'échange entre les niveaux de température des sources et les températures effectives de fonctionnement de la pompe.

### EXPOSÉ DE L'INVENTION

Il existe par conséquent un besoin pour proposer une solution alternative pour la conception d'une pompe à chaleur à absorption gaz. Il existe notamment un besoin pour permettre une valorisation optimale de l'énergie produite au niveau de la pompe, et en particulier de celle issue du générateur par chaudière gaz, ainsi qu'un besoin pour optimiser le fonctionnement de la pompe indépendamment de la température extérieure, autrement dit même en cas de faibles températures.

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, un dispositif de pompe à chaleur à absorption gaz selon la revendication 1.

Grâce à l'invention, les performances globales du dispositif peuvent être augmentées. En particulier, il peut être possible d'obtenir une valorisation maximale de l'énergie issue de la combustion du gaz dans le générateur par la récupération de la chaleur produite, notamment à différents niveaux de température. De plus, le fonctionnement du dispositif de PAC à absorption à moteur gaz peut être optimisé à tout instant, y compris lors de périodes de faibles températures extérieures pouvant généralement dégrader le rendement du dispositif. Le dispositif selon l'invention peut également permettre une réduction significative des coûts de pose et de fabrication. Par ailleurs, pour un couple réfrigérant/absorbant correspondant à ammoniac/eau, l'invention peut permettre d'établir une protection contre d'éventuelles fuites d'ammoniac par la mise en place d'une chambre étanche en communication avec l'extérieur, de façon à respecter les normes imposées dans l'utilisation de l'ammoniac. L'invention peut être utilisée pour la production de chauffage, également d'eau chaude sanitaire, voire éventuellement à des fins de climatisation.

Le dispositif de pompe à chaleur à absorption gaz selon l'invention peut en outre comporter l'une ou plusieurs des caractéristiques suivantes prises isolément ou suivant toutes combinaisons techniques possibles.

Le troisième conduit d'alimentation en air extérieur débouchant notamment à proximité de l'entrée d'air extérieur du second conduit.

Le générateur peut le cas échéant comporter un échangeur de chaleur eau/fumées au travers duquel circule l'eau de circuit de chauffage, préalablement chauffée par la chaleur produite par l'absorbeur et le condenseur, de manière à permettre la récupération de chaleur disponible au niveau des fumées avant leur évacuation dans le premier conduit.

Le dispositif peut par ailleurs comporter une unité de production d'eau chaude sanitaire. Le dispositif peut être monobloc. En outre, le dispositif peut être installé en interne, notamment à l'intérieur d'un habitat ou d'un bâtiment.

Le générateur peut être configuré pour permettre un chauffage direct de la solution riche d'un mélange de fluides réfrigérant/absorbant.

En variante, le dispositif peut comporter un échangeur de chaleur intermédiaire permettant le chauffage indirect de la solution riche d'un mélange de fluides réfrigérant/absorbant par le biais d'un fluide caloporteur circulant dans le générateur.

Le dispositif peut comporter une unité de production d'eau chaude sanitaire, comportant un échangeur de chaleur permettant le chauffage de l'eau chaude sanitaire, et il peut en outre comporter un générateur par chaudière gaz additionnel, situé en amont de l'échangeur de chaleur de l'unité de production d'eau chaude sanitaire, permettant la production d'eau chaude sanitaire sans mise en route du cycle à absorption du dispositif.

En variante, le dispositif peut comporter une unité de production d'eau chaude sanitaire et une vanne de sélection d'alimentation vers le circuit de chauffage et/ou vers l'unité de production d'eau chaude sanitaire, et comporter en outre un générateur par chaudière gaz additionnel, situé en amont de la vanne de sélection, permettant la production de chauffage et/ou d'eau chaude sanitaire sans mise en route du cycle à absorption du dispositif.

Par ailleurs, le dispositif peut comporter une unité de production d'eau chaude sanitaire sans stockage, comportant un échangeur de chaleur à plaque et un mitigeur thermostatique.

Le dispositif de pompe à chaleur à absorption gaz selon l'invention peut comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- les figures 1 et 2 illustrent de façon schématique deux variantes du principe général de fonctionnement d'une pompe à chaleur à absorption à générateur gaz selon l'art antérieur,
- la figure 3 illustre de façon schématique un exemple de réalisation d'un dispositif de pompe à chaleur à absorption gaz conforme à l'invention, et
- les figures 4 et 5 illustrent respectivement deux variantes de réalisation du dispositif de pompe à chaleur de la figure 3.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 et 2 ont déjà été décrites précédemment dans la partie relative à l'état de la technique antérieure.

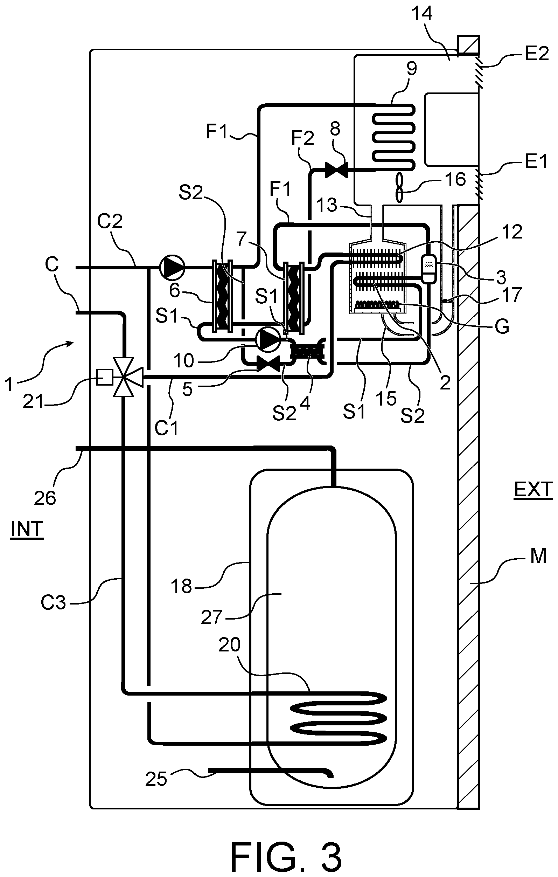

Par ailleurs, pour l'ensemble des trois exemples de réalisation des figures 3, 4 et 5, le dispositif 1 de pompe à chaleur à absorption gaz est situé à l'intérieur d'un local, pouvant par exemple être localisé dans un habitat ou un bâtiment quelconque où un besoin d'installation d'une telle pompe à chaleur existe. Ce local comporte un mur M formant la séparation entre l'intérieur INT du local et l'extérieur EXT du local.

Les exemples conformes à l'invention de dispositif 1 de PAC à absorption à moteur gaz, décrits ci-après, permettent de réaliser un couplage optimal entre le cycle à absorption et le générateur équipé du brûleur (ou chaudière) gaz, aussi bien du point de vue énergétique que du point de vue de la conception.

Ces exemples de dispositif 1 de PAC à absorption à moteur gaz peuvent permettre la production de chauffage et/ou d'eau chaude sanitaire (ECS), voire éventuellement de climatisation, comme il est décrit par la suite.

De façon préférentielle, tous ces dispositifs 1 de PAC à absorption à moteur gaz sont en outre monoblocs, c'est-à-dire qu'ils forment chacun une seule et même unité située à l'intérieur du local.

Le couple réfrigérant/absorbant utilisé dans ces dispositifs 1 de PAC à absorption à moteur gaz peut être choisi parmi différentes possibilités. En particulier, il peut correspondre à ammoniac/eau. Dans ce cas, le dispositif 1 peut être contenu dans une chambre étanche en communication avec l'extérieur EXT de façon à établir une protection contre d'éventuelles fuites d'ammoniac, et de façon à respecter les normes imposées dans l'utilisation de l'ammoniac.

On a tout d'abord représenté sur la figure 3, de manière schématique, un premier exemple de réalisation d'un dispositif 1 de PAC à absorption à moteur gaz conforme à l'invention.

De façon habituelle, le dispositif 1 comporte un générateur 2 pourvu d'un brûleur gaz G, permettant le chauffage d'une solution riche S1 (i.e. riche en fluide réfrigérant) d'un mélange de fluides réfrigérant/absorbant, un condenseur 7 permettant la condensation d'un fluide réfrigérant gazeux F1 en un fluide réfrigérant liquide F2, un évaporateur 9 permettant l'évaporation du fluide réfrigérant liquide F2 de façon à obtenir en sortie un fluide réfrigérant gazeux F1, et un absorbeur 6 permettant la mise en contact du fluide réfrigérant gazeux F1 avec une solution pauvre S2 (i.e. pauvre en fluide réfrigérant) d'un mélange de fluides réfrigérant/absorbant, issue de la désorption du fluide réfrigérant après chauffage dans le générateur 2, de sorte à former une solution riche S1 retournant vers le générateur 2.

Plus précisément, comme décrit précédemment en référence à la figure 1, au sein du générateur 2, la chaleur issue de la combustion du gaz G est utilisée pour faire désorber le fluide réfrigérant de la solution absorbante riche S1. A la sortie du générateur 2, on obtient alors un mélange diphasique, comportant d'une part la solution pauvre S2 et d'autre part le fluide réfrigérant gazeux F1.

Ce mélange diphasique est ainsi séparé par gravité par le biais du séparateur 3, la solution pauvre S2 retournant alors vers l'absorbeur 6, après avoir traversé un échangeur de récupération de chaleur 4 et un détendeur solution 5. Le fluide réfrigérant gazeux F1 est quant à lui condensé dans le condenseur 7 à la sortie duquel on obtient alors le fluide réfrigérant liquide F2.

Ce fluide réfrigérant liquide F2 est ensuite détendu dans un détendeur solution 8, puis évaporé à basse pression dans l'évaporateur 9. A la sortie de l'évaporateur 9, le fluide réfrigérant est de nouveau un fluide réfrigérant gazeux F1. Il est alors envoyé vers l'absorbeur 6 dans lequel il est remis au contact de la solution pauvre S2 en provenance du générateur 2. La solution pauvre S2 se charge alors en fluide réfrigérant en absorbant la vapeur. De cette façon, à la sortie de l'absorbeur 6, on obtient la solution riche S1 qui est renvoyée vers le générateur 2 par l'intermédiaire d'une pompe à solution 10.

La condensation du fluide réfrigérant gazeux F1 dans le condenseur 7 et son absorption par la solution pauvre S2 dans l'absorbeur 6 permettent respectivement de dégager de la chaleur pour le départ d'eau C2 et le retour d'eau C1 d'un circuit de chauffage C.

Par ailleurs, conformément à l'invention et afin de valoriser de façon optimale l'énergie produite par le générateur 2, ainsi que pour optimiser le fonctionnement du dispositif 1 indépendamment de la température du milieu extérieur EXT, le générateur 2 comporte un premier conduit 13 d'évacuation des fumées de combustion. De plus, l'évaporateur 9 est situé dans un second conduit 14 comportant une entrée d'air extérieur E1 (pour la prise d'air neuf) et une sortie d'air extérieur E2 (pour le rejet d'air vicié), formées dans le mur M de séparation entre l'intérieur INT et l'extérieur EXT. Le premier conduit 13 débouche dans le second conduit 14 de manière à ce que la chaleur des fumées de combustion issues du brûleur gaz G soit utilisée pour le chauffage de l'air utilisé dans l'évaporateur 9.

De cette façon, il peut être possible de répondre à la problématique usuelle liée à l'utilisation d'air extérieur dans une PAC à absorption à moteur gaz puisque l'air extérieur capté par l'entrée d'air extérieur E1 est réchauffé par le biais des fumées de combustion issues du premier conduit 13.

Par ailleurs, il est également possible de valoriser au mieux la chaleur dégagée par la combustion du gaz puisque celle-ci est récupérée au moins partiellement dans le premier conduit 13 pour être utilisée au niveau de l'évaporateur 9.

En outre, il est possible de faciliter les conditions d'installation du dispositif 1 de PAC à absorption à moteur gaz puisque le refroidissement par air ne nécessite pas la présence d'une unité extérieure. L'alimentation en air neuf du générateur 2 et l'évacuation des frigories produites à l'évaporateur 9 sont assurées par une même prise d'entrée d'air extérieur E1 et par un rejet commun de sortie d'air vicié extérieur E2.

Comme on peut le voir sur la figure 3, le générateur 2 comporte en outre un troisième conduit 15 d'alimentation en air extérieur qui débouche dans le second conduit 14 dans lequel est situé l'évaporateur 9, à proximité de l'entrée d'air extérieur E1.

De façon avantageuse, le premier conduit 13 part de la partie haute du générateur 2 pour déboucher directement dans le second conduit 14, et le troisième conduit 15 arrive directement dans la partie basse du générateur 2, au niveau du brûleur gaz G, depuis le second conduit 14. Le second conduit 14 est en communication fluidique avec le premier conduit 13 et le troisième conduit 15. De cette façon, l'air neuf en provenance de l'entrée d'air extérieur E1 du second conduit 14 parvient au brûleur gaz G en traversant le troisième conduit 15, et se trouve également réchauffé par les fumées de combustion issues du premier conduit 13.

Par ailleurs, le dispositif 1 comporte un premier ventilateur 16 disposé dans le second conduit 14 au niveau de l'évaporateur 9 pour permettre la ventilation entre l'air extérieur issu de l'entrée d'air extérieur E1 et l'air chaud des fumées de combustion issues du premier conduit 13, et en particulier permettre la circulation de l'air nécessaire à l'évacuation des frigories produites au niveau de l'évaporateur 9.

De plus, le dispositif 1 comporte un deuxième ventilateur 17 situé dans le troisième conduit 15 permettant la ventilation de l'air extérieur issu de l'entrée d'air extérieur E1 vers le brûleur gaz G du générateur 2 pour son alimentation.

Les premier 16 et deuxième 17 ventilateurs sont asynchrones.

Par ailleurs, comme expliqué précédemment, les chaleurs produites au niveau de l'absorbeur 6 et du condenseur 7 par le cycle à absorption peuvent permettre de chauffer l'eau de retour C2 du circuit de chauffage C. L'eau du circuit de chauffage C peut alors traverser ensuite un échangeur de chaleur eau/fumées 12 situé dans le générateur 2 de manière à permettre la récupération de chaleur disponible au niveau des fumées avant leur évacuation dans le premier conduit 13. Ce type d'échangeur eau/fumées 12 est tel que ceux classiquement présents dans les chaudières gaz à condensation.

De cette façon, l'invention permet une première récupération de chaleur des fumées de combustion par le biais de l'échangeur de chaleur eau/fumées 12 et une deuxième récupération de chaleur des fumées de combustion par le biais du premier conduit 13 relié à l'évaporateur 9, de sorte que la valorisation de la chaleur produite au sein du générateur 2 est maximale. Il est donc possible d'augmenter significativement les performances globales du dispositif 1 en assurant une évaporation du fluide réfrigérant en provenance du condenseur 7 à une température plus élevée que celle de l'air extérieur.

Par ailleurs, comme on peut le voir sur la figure 3, le dispositif 1 comporte une unité de production d'eau chaude sanitaire 18. Cette unité de production d'eau chaude sanitaire 18 comporte un ballon de stockage 27 d'eau chaude sanitaire et un échangeur de chaleur 20 permettant le chauffage d'eau froide d'une arrivée d'eau froide 25 par le biais de la circulation dans l'échangeur de chaleur 20 d'eau de chauffage C3 préalablement réchauffée dans le générateur 2.

Plus précisément, le dispositif 1 comporte une vanne de sélection 21, en particulier une vanne trois voies, d'alimentation vers le circuit de chauffage C et/ou vers l'unité de production d'eau chaude sanitaire 18. Aussi, l'eau de chauffage C3, traversant l'échangeur de chaleur 20, provient de la sélection adéquate de la vanne trois voies 21 pour la production d'eau chaude sanitaire, avant de retourner vers l'eau de retour C2 du circuit de chauffage C après passage dans l'échangeur de chaleur 20. L'eau chaude sanitaire ainsi produite est alors évacuée par la sortie d'eau chaude sanitaire 26.

Comme indiqué précédemment, le couplage entre le cycle à absorption et le brûleur gaz G du générateur 2 peut permettre d'obtenir un fonctionnement optimal d'un point de vue énergétique.

En particulier, dans le cas où le dispositif 1 est utilisé uniquement pour la production de chauffage (donc sans production d'eau chaude sanitaire), les niveaux de température et les bilans de puissance peuvent être les suivants : la température à la sortie d'air extérieur E2 est de l'ordre de 2°C tandis que la température à l'entrée d'air extérieur E1 est de l'ordre de 0°C ; la température au niveau de l'évaporateur 9 à la sortie du premier conduit 13 est de l'ordre de 7°C ; la température de l'eau de départ C2 du circuit de chauffage C est de l'ordre de 45°C tandis que la température de l'eau de retour C1 du circuit de chauffage C est de l'ordre de 35°C. En outre, dans le générateur 2, la température au niveau du brûleur gaz G est de l'ordre de 100°C, alors qu'elle est de l'ordre de 90°C au niveau de l'échangeur eau/fumées 12 et de l'ordre de 55°C en entrée du premier conduit 13. Par ailleurs, la puissance nécessaire du circuit de chauffage C est de l'ordre de 6 kW, alors qu'elle est de l'ordre de 1,7 kW pour l'évaporateur 9 et de l'ordre de 4,5 kW pour le générateur 2.

Le tableau ci-dessous présente une comparaison des performances entre le dispositif 1 de PAC à absorption à moteur gaz conforme à l'invention selon l'exemple de la figure 3 et un dispositif de PAC à absorption à moteur gaz selon l'art antérieur, par exemple selon l'exemple de la figure 1 décrit précédemment. Les deux dispositifs ne sont ici utilisés que pour la production de chauffage.

| | *Unité* | *Exemple* *figure 3* *(selon l'invention)* | *Exemple* *figure 1* *(selon l'art antérieur)* |
|---|---|---|---|
| *Performance du dispositif 1* | | | |
| coefficient de performance thermique (COP) de la PAC | - | 1,38 | 1,12 |
| rendement du brûleur gaz G | - | 0,9 | 0,9 |
| gain en performance | - | 1,25 | 1,01 |

| *Circuit de chauffage C* | | | |
|---|---|---|---|
| puissance nécessaire | kW | 6 | 6 |
| température de départ | °C | 45 | 45 |
| température de retour | °C | 35 | 35 |
| débit | kg/h | 516 | 516 |

| *Circuit de l'évaporateur 9* | | | |
|---|---|---|---|
| puissance nécessaire | kW | 1,7 | 0,6 |
| température de l'air extérieur | °C | 0 | 0 |
| température de départ | °C | 7,24 | - |
| température de retour | °C | 2,24 | -5,0 |
| débit d'air | kg/h | 1189,6 | 462,9 |

| *Circuit du générateur gaz 2* | | | |
|---|---|---|---|
| puissance nécessaire | kW | 4,3 | 5,4 |
| puissance du brûleur gaz G | kW | 4,8 | 6,0 |
| débit gaz | m³/h | 0,5 | 0,6 |
| excès d'air | - | 1,1 | 1,1 |
| débit d'air | m³/h | 4,5 | 5,6 |
| débit des fumées | m³/h | 5,0 | 6,2 |
| capacité thermique massique à pression constante (Cp) des fumées | J/kg.K | 1200 | 1200 |
| température du générateur 2 | °C | 100 | 100 |
| température des fumées de chauffage | °C | 90 | 90 |
| puissance additionnelle de chauffage | kW | 0,0583 | - |
| température des fumées en entrée de l'évaporateur 9 | °C | 55 | - |

Par comparaison des deux gains en performance mentionnés dans ce tableau, on constate ainsi que l'invention permet avantageusement une amélioration de près de 25 % des performances des pompes à chaleur à absorption gaz.

Par ailleurs, dans l'exemple de réalisation selon la figure 3, le générateur 2 est configuré pour permettre un chauffage direct de la solution riche S1 du mélange de fluides réfrigérant/absorbant. Toutefois, d'autres possibilités peuvent être utilisées.

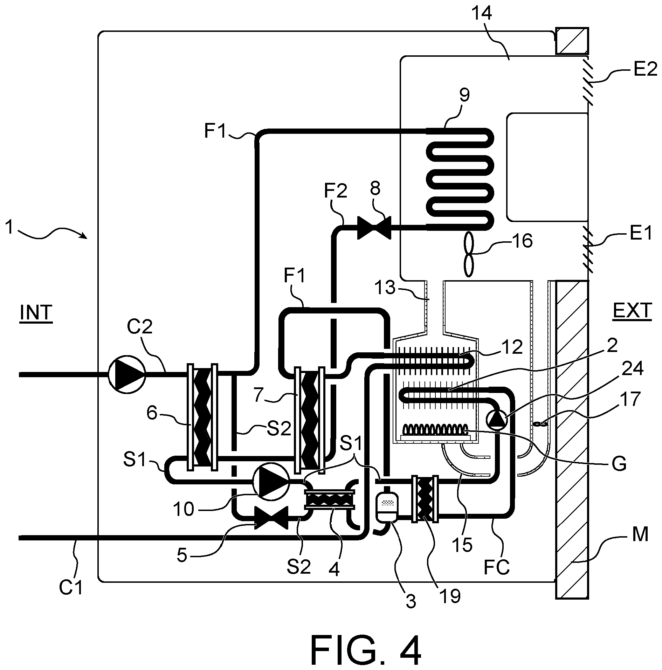

Ainsi, la figure 4 illustre un deuxième exemple de réalisation d'un dispositif 1 de PAC à absorption à moteur gaz conforme à l'invention, dans lequel le chauffage de la solution riche S1 est indirect.

Par rapport au dispositif 1 de la figure 3, seule la partie relative au générateur 2 est modifiée, la partie comportant l'unité de production d'eau chaude sanitaire 18 et la vanne de sélection 21 n'ayant pas été représentée par souci de simplification.

Dans l'exemple de réalisation de la figure 4, le dispositif 1 comporte ainsi un échangeur de chaleur intermédiaire 19 permettant le chauffage indirect de la solution riche S1 par le biais d'un fluide caloporteur FC circulant dans le générateur 2, de façon semblable à ce qui a été décrit précédemment pour l'exemple de la figure 2.

L'utilisation de l'échangeur de chaleur intermédiaire 19 permet de dissocier le brûleur gaz G du restant du générateur 2. Le fluide caloporteur FC permet de récupérer la chaleur issue de la combustion du gaz au niveau de l'échangeur de chaleur intermédiaire 19 et de la transmettre au générateur 2 par le biais d'un circulateur 24.

Cette réalisation peut engendrer une augmentation de la consommation électrique par l'ajout d'un circulateur 24, et peut également ajouter un pincement d'échange thermique par la présence de l'échangeur de chaleur intermédiaire 19. Toutefois, elle peut permettre une dissociation de la partie de génération de vapeur de réfrigérant de la partie brûleur gaz G au sein du générateur 2, ce qui peut ainsi présenter un intérêt en termes de limitation de la pression au sein du cycle à absorption et donc une éventuelle facilité de conception des composants du dispositif 1.

Par ailleurs, dans une autre variante de réalisation, le dispositif 1 de PAC à absorption à moteur gaz conforme à l'invention peut comporter un générateur par chaudière gaz additionnel, appelé encore générateur gaz d'appoint.

Par exemple, un tel générateur gaz d'appoint peut être présent sur le dispositif 1 uniquement pour permettre la production d'eau chaude sanitaire. Il est alors situé par exemple en amont de l'échangeur de chaleur 20 de l'unité de production d'eau chaude sanitaire 18. Il peut ainsi permettre la production d'eau chaude sanitaire sans mise en route du cycle à absorption du dispositif 1. Cette réalisation peut par exemple présenter un intérêt lorsque les besoins d'utilisation du dispositif 1 sont moindres, par exemple lors des périodes estivales, et lorsque le démarrage complet de la PAC à absorption à moteur gaz ne s'avère pas nécessaire.

En variante, un tel générateur gaz d'appoint peut aussi être présent sur le dispositif 1 pour permettre la production d'eau chaude sanitaire et également la production de chauffage. Il est alors situé en amont de la vanne de sélection 21 pour permettre la production de chauffage et/ou d'eau chaude sanitaire sans mise en route du cycle à absorption du dispositif 1. Il peut ainsi permettre par exemple de compléter la production de chaleur en cas de puissance trop faible de la pompe à chaleur en fonction des besoins. Cette réalisation peut par exemple présenter un intérêt pour limiter la puissance de la pompe à chaleur en répondant aux pics d'appels de puissance de chauffage et/ou d'eau chaude sanitaire.

Par ailleurs, dans l'exemple de réalisation selon la figure 3, l'eau chaude sanitaire est stockée dans le ballon de stockage 27. Toutefois, d'autres possibilités peuvent être utilisées.

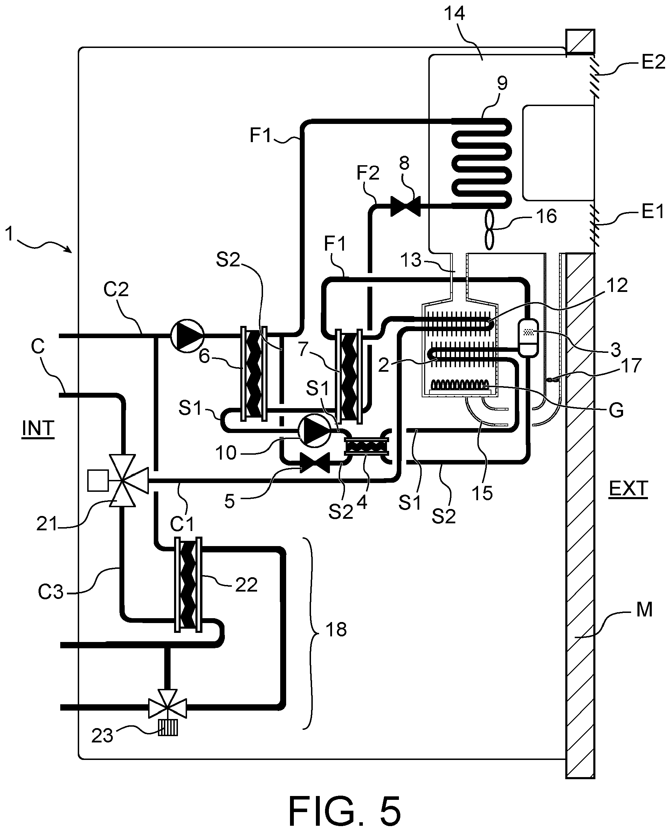

Ainsi, la figure 5 illustre un troisième exemple de réalisation d'un dispositif 1 de PAC à absorption à moteur gaz conforme à l'invention, dans lequel l'eau chaude sanitaire est produite de façon instantanée, l'unité de production d'eau chaude sanitaire 18 étant dépourvue de stockage.

Par rapport au dispositif 1 de la figure 3, seule la partie comportant l'unité de production d'eau chaude sanitaire 18 est modifiée.

Pour permettre une production de façon continue et sans stockage de l'eau chaude sanitaire, le dispositif 1 comporte un échangeur de chaleur à plaque 22 et un mitigeur thermostatique 23, comme représenté. Cette réalisation peut permettre de limiter l'encombrement général du dispositif 1, bien qu'elle impose un fonctionnement du brûleur gaz G lors de chaque puisage d'eau chaude sanitaire, puisque cette dernière n'est jamais stockée.

Bien entendu, l'invention n'est pas limitée aux exemples de réalisation qui viennent d'être décrits. Diverses modifications peuvent y être apportées par l'homme du métier dans le cadre de l'invention telle que définie dans les revendications annexées.

En particulier, il pourrait être envisagé de réaliser une inversion entre le condenseur 7 et l'évaporateur 9 de façon à permettre la production d'air climatisé, par exemple lors des périodes estivales. Toutefois, le préchauffage d'air au niveau du condenseur 7 peut être pénalisant en termes de performances globales du dispositif 1.

L'expression « comportant un » doit être comprise comme étant synonyme de « comportant au moins un », sauf si le contraire est spécifié.

## Revendications

1. Dispositif (1) de pompe à chaleur à absorption gaz, comportant :
- un couple de fluides réfrigérant/absorbant, le fluide réfrigérant (F1, F2) subissant des changements d'état au sein du dispositif (1),
- un générateur (2) de combustion de gaz (G) ayant un brûleur à gaz, permettant le chauffage d'une solution riche (S1) d'un mélange de fluides réfrigérant/absorbant pour en faire désorber un fluide réfrigérant gazeux (F1),
- un condenseur (7) permettant la condensation du fluide réfrigérant gazeux (F1) en un fluide réfrigérant liquide (F2),
- un évaporateur (9) permettant l'évaporation du fluide réfrigérant liquide (F2) de façon à obtenir en sortie un fluide réfrigérant gazeux (F1),
- un absorbeur (6) permettant la mise en contact du fluide réfrigérant gazeux (F1) avec une solution pauvre (S2) d'un mélange de fluides réfrigérant/absorbant, issue de la désorption du fluide réfrigérant après chauffage dans le générateur (2), de sorte à former une solution riche (S1) d'un mélange de fluides réfrigérant/absorbant retournant vers le générateur (2), le générateur (2) comportant un premier conduit (13) d'évacuation des fumées de combustion, **caractérisé**
**en ce que** l'évaporateur (9) est situé au moins partiellement dans un second conduit (14) comportant une entrée d'air extérieur (E1) et une sortie d'air extérieur (E2), et en ce que le premier conduit (13) débouche dans le second conduit (14) de manière à ce que la chaleur des fumées de combustion soit utilisée pour le chauffage de l'air utilisé dans l'évaporateur (9),
**en ce que** le générateur (2) comporte un troisième conduit (15) d'alimentation en air extérieur débouchant dans le second conduit (14) dans lequel est situé l'évaporateur (9), en ce que le dispositif comporte un premier dispositif de ventilation (16) situé dans le second conduit (14) au niveau de l'évaporateur (9) permettant la ventilation entre l'air extérieur issu de l'entrée d'air extérieur (E1) et l'air chaud des fumées de combustion issues du premier conduit (13),
**en ce que** le dispositif comporte un deuxième dispositif de ventilation (17) situé dans le troisième conduit (15) permettant la ventilation de l'air extérieur issu de l'entrée d'air extérieur (E1) vers le brûleur à gaz (G) du générateur (2), et
**en ce que** les premier (16) et deuxième (17) dispositifs de ventilation sont asynchrones.

2. Dispositif selon la revendication 1, **caractérisé en ce que** l'entrée d'air extérieur (E1) du second conduit (14) et le premier conduit (13) d'évacuation des fumées sont en communication fluidique de sorte que la chaleur des fumées puisse chauffer l'air extérieur.

3. Dispositif selon l'une quelconque des revendications précédentes, **caractérisé en ce que** le générateur (2) comporte un échangeur de chaleur eau/fumées (12) au travers duquel circule l'eau de circuit de chauffage (C), préalablement chauffée par la chaleur produite par l'absorbeur (6) et le condenseur (7), de manière à permettre la récupération de chaleur disponible au niveau des fumées avant leur évacuation dans le premier conduit (13).

4. Dispositif selon l'une quelconque des revendications précédentes, **caractérisé en ce qu'**il est monobloc.

5. Dispositif selon l'une quelconque des revendications précédentes, **caractérisé en ce qu'**il est apte à être installé en interne, notamment à l'intérieur d'un habitat ou d'un bâtiment.

6. Dispositif selon l'une quelconque des revendications précédentes, **caractérisé en ce qu'**il comporte une unité de production d'eau chaude sanitaire (18).

7. Dispositif selon l'une quelconque des revendications précédentes, **caractérisé en ce que** le générateur (2) est configuré pour permettre un chauffage direct de la solution riche (S1) d'un mélange de fluides réfrigérant/absorbant.

8. Dispositif selon l'une quelconque des revendications 1 à 6, **caractérisé en ce qu'**il comporte un échangeur de chaleur intermédiaire (19) permettant le chauffage indirect de la solution riche (S1) d'un mélange de fluides réfrigérant/absorbant par le biais d'un fluide caloporteur (FC) circulant dans le générateur (2).

9. Dispositif selon l'une quelconque des revendications précédentes, **caractérisé en ce qu'**il comporte une unité de production d'eau chaude sanitaire (18), comportant un échangeur de chaleur (20) permettant le chauffage de l'eau chaude sanitaire, et **en ce qu'**il comporte en outre un générateur par chaudière gaz additionnel, situé en amont de l'échangeur de chaleur (20) de l'unité de production d'eau chaude sanitaire (18), permettant la production d'eau chaude sanitaire sans mise en route du cycle à absorption du dispositif (1).

10. Dispositif selon l'une quelconque des revendications 1 à 8, **caractérisé en ce qu'**il comporte une unité de production d'eau chaude sanitaire (18) et une vanne de sélection (21) d'alimentation vers le circuit de chauffage (C) et/ou vers l'unité de production d'eau chaude sanitaire (18), et **en ce qu'**il comporte en outre un générateur par chaudière gaz additionnel, situé en amont de la vanne de sélection (21), permettant la production de chauffage et/ou d'eau chaude sanitaire sans mise en route du cycle à absorption du dispositif (1).

11. Dispositif selon l'une quelconque des revendications précédentes, **caractérisé en ce qu'**il comporte une unité de production d'eau chaude sanitaire (18) sans stockage, comportant un échangeur de chaleur à plaque (22) et un mitigeur thermostatique (23).

## Patentansprüche

1. Wärmepumpenvorrichtung (1) mit Gasabsorption, umfassend:
- ein Paar von Kühl-/Absorptionsfluiden, wobei das Kühlfluid (F1, F2) innerhalb der Vorrichtung (1) Zustandsänderungen erfährt,
- einen Generator (2) zur Verbrennung von Gas (G), der einen Gasbrenner hat, der ein Erhitzen einer reichen Lösung (S1) einer Mischung von Kühl-/ Absorptionsfluiden ermöglicht, um hiervon ein gasförmiges Kühlfluid (F1) desorbieren zu lassen,
- einen Kondensor (7), der die Kondensation des gasförmigen Kühlfluids (F1) in ein flüssiges Kühlfluid (F2) ermöglicht,
- einen Verdampfer (9), der die Verdampfung des flüssigen Kühlfluids (F2) derart ermöglicht, dass am Ausgang ein gasförmiges Kühlfluid (F1) erhalten wird,
- einen Absorber (6), der das Inkontaktbringen des gasförmigen Kühlfluids (F1) mit einer armen Lösung (S2) einer Mischung von Kühl-/Absorptionsfluiden ermöglicht, die von der Desorption des Kühlfluids nach der Erhitzung in dem Generator (2) stammt, derart, dass eine reiche Lösung (S1) einer Mischung von Kühl-/ Absorptionsfluiden gebildet wird, die zu dem Generator (2) zurückkehrt, wobei der Generator (2) eine erste Leitung (13) zur Abführung der Verbrennungsabgase umfasst, **dadurch gekennzeichnet, dass** der Verdampfer (9) wenigstens teilweise in einer zweiten Leitung (14) angeordnet ist, die einen Außenlufteingang (E1) und einen Außenluftausgang (E2) umfasst, und dass die erste Leitung (13) in die zweite Leitung (14) derart mündet, dass die Wärme der Verbrennungsabgase für die Erhitzung der verwendeten Luft in dem Verdampfer (9) verwendet wird,
dass der Generator (2) eine dritte Leitung (15) zur Versorgung mit Außenluft umfasst, die in die zweite Leitung (14) mündet, in der der Verdampfer (9) angeordnet ist, dass die Vorrichtung eine erste Ventilationsvorrichtung (16) umfasst, die in der zweiten Leitung (14) auf Höhe des Verdampfers (9) angeordnet ist, die die Ventilation zwischen der Außenluft, die von dem Außenlufteingang (E1) stammt, und der heißen Luft der Verbrennungsabgase ermöglicht, die von der ersten Leitung (13) stammen,
dass die Vorrichtung eine zweite Ventilationsvorrichtung (17) umfasst, die in der dritten Leitung (15) angeordnet ist, die die Ventilation der Außenluft, die von dem Außenlufteingang (E1) stammt, in Richtung des Gasbrenners (G) des Generators (2) ermöglicht, und dass die erste (16) und die zweite (17) Ventilationsvorrichtung asynchron sind.

2. Vorrichtung nach Anspruch 1, **dadurch gekennzeichnet, dass** der Außenlufteingang (E1) der zweiten Leitung (14) und die erste Leitung (13) zur Abführung der Abgase in fluidischer Kommunikation derart sind, dass die Wärme der Abgase die Außenluft erhitzen kann.

3. Vorrichtung nach einem der vorhergehenden Ansprüche, **dadurch gekennzeichnet, dass** der Generator (2) einen Wasser/Abgase-Wärmetauscher (12) umfasst, durch den hindurch das Wasser des Heizkreises (C) zirkuliert, das zuvor durch die Wärme erhitzt wird, die durch den Absorber (6) und den Kondensor (7) erzeugt ist, derart, dass die Rückgewinnung der Wärme, die auf Höhe der Abgase verfügbar ist, vor ihrer Abführung in der ersten Leitung (13) ermöglicht wird.

4. Vorrichtung nach einem der vorhergehenden Ansprüche, **dadurch gekennzeichnet, dass** sie einstückig ist.

5. Vorrichtung nach einem der vorhergehenden Ansprüche, **dadurch gekennzeichnet, dass** sie im Inneren installiert werden kann, insbesondere im Inneren einer Wohnung oder eines Gebäudes.

6. Vorrichtung nach einem der vorhergehenden Ansprüche, **dadurch gekennzeichnet, dass** sie eine Einheit zur Erzeugung von warmem Brauchwasser (18) umfasst.

7. Vorrichtung nach einem der vorhergehenden Ansprüche, **dadurch gekennzeichnet, dass** der Generator (2) dazu konfiguriert ist, eine direkte Erhitzung der reichen Lösung (S1) einer Mischung von Kühl-/Absorptionsfluiden zu ermöglichen.

8. Vorrichtung nach einem der Ansprüche 1 bis 6, **dadurch gekennzeichnet, dass** sie einen Zwischenwärmetauscher (19) umfasst, der die indirekte Erhitzung der reichen Lösung (S1) einer Mischung von Kühl-/ Absorptionsfluiden mittels eines Wärmeträgerfluids (FC) ermöglicht, das in dem Generator (2) zirkuliert.

9. Vorrichtung nach einem der vorhergehenden Ansprüche, **dadurch gekennzeichnet, dass** sie eine Einheit zur Erzeugung von warmem Brauchwasser (18) umfasst, umfassend einen Wärmetauscher (20), der die Erhitzung des warmen Brauchwassers ermöglicht, und dass sie ferner einen zusätzlichen Gaskesselgenerator umfasst, der stromaufwärts des Wärmetauschers (20) der Einheit zur Erzeugung von warmem Brauchwasser (18) angeordnet ist, der die Erzeugung von warmem Brauchwasser ohne Verwendung des Absorptionszyklus der Vorrichtung (1) ermöglicht.

10. Vorrichtung nach einem der Ansprüche 1 bis 8, **dadurch gekennzeichnet, dass** sie eine Einheit zur Erzeugung von warmem Brauchwasser (18) und ein Auswahlventil (21) für die Versorgung in Richtung des Heizkreises (C) und/oder in Richtung einer Einheit zur Erzeugung von warmem Brauchwasser (18) umfasst, und dass sie ferner einen zusätzlichen Gaskesselgenerator umfasst, der stromaufwärts des Auswahlventils (21) angeordnet ist, der die Erzeugung von Hitze und/oder von warmem Brauchwasser ohne Verwendung des Absorptionszyklus der Vorrichtung (1) ermöglicht.

11. Vorrichtung nach einem der vorhergehenden Ansprüche, **dadurch gekennzeichnet, dass** sie eine Einheit zur Erzeugung von warmem Brauchwasser (18) ohne Speicherung umfasst, der einen Plattenwärmetauscher (22) und einen Thermostatmischer (23) umfasst.

## Claims

1. Gas absorption heat pump device (1) including:
- a pair of coolant/absorbent fluids, the coolant fluid (F1, F2) being subjected to state changes inside the device (1),
- a gas combustion (G) generator (2) having a gas burner, for heating a rich solution (S1) of a mixture of coolant/absorbent fluids so as to desorb a gaseous coolant fluid (F1),
- a condenser (7) for condensing the gaseous coolant fluid (F1) into a liquid coolant fluid (F2),
- an evaporator (9) for evaporating the liquid coolant fluid (F2) so as to obtain a gaseous coolant fluid (F1) at the outlet,
- an absorber (6) for bringing the gaseous coolant fluid (F1) into contact with a weak solution (S2) of a mixture of coolant/absorbent fluids, coming from desorption of the coolant fluid after heating in the generator (2), so as to form a rich solution (S1) of a mixture of coolant/absorbent fluids returning to the generator (2),
the generator (2) including a first pipe (13) for discharging the combustion fumes, **characterised**
**in that** the evaporator (9) is located at least partially in a second pipe (14) including an outside air inlet (E1) and an outside air outlet (E2), and in that the first pipe (13) leads into the second pipe (14) so that the heat from the combustion fumes is used for heating the air used in the evaporator (9),
**in that** the generator (2) includes a third pipe (15) for supplying outside air leading into the second pipe (14) wherein the evaporator (9) is located,
**in that** the device includes a first ventilation device (16) located in the second pipe (14) at the evaporator (9) for ventilating between the outside air coming from the outside air inlet (E1) and the hot air of the combustion fumes coming from the first pipe (13),
**in that** the device includes a second ventilation device (17) located in the third pipe (15) for ventilating the outside air coming from the outside air inlet (E1) towards the gas burner (G) of the generator (2), and
**in that** the first (16) and second (17) ventilation devices are asynchronous.

2. Device according to claim 1, **characterised in that** the outside air inlet (E1) of the second pipe (14) and the first pipe (13) for discharging the fumes are in fluidic communication so that the heat of the fumes may heat the outside air.

3. Device according to any one of the preceding claims, **characterised in that** the generator (2) includes a water/fumes heat exchanger (12) through which the heating circuit (C) water circulates, heated beforehand by the heat produced by the absorber (6) and the condenser (7), so as to make it possible to recover available heat at the fumes before the discharge thereof into the first pipe (13).

4. Device according to any one of the preceding claims, **characterised in that** it is one-piece.

5. Device according to any one of the preceding claims, **characterised in that** it is capable of being installed internally, in particular inside a home or a building.

6. Device according to any one of the preceding claims, **characterised in that** it includes a domestic hot water production unit (18).

7. Device according to any one of the preceding claims, **characterised in that** the generator (2) is configured to enable direct heating of the rich solution (S1) of a mixture of coolant/absorbent fluids.

8. Device according to any one of claims 1 to 6, **characterised in that** it includes an intermediate heat exchanger (19) for indirectly heating the rich solution (S1) of a mixture of coolant/absorbent fluids via a heat transfer fluid (FC) circulating in the generator (2).

9. Device according to any one of the preceding claims, **characterised in that** it includes a domestic hot water production unit (18), including a heat exchanger (20) for heating the domestic hot water, and **in that** it further includes an additional gas boiler generator, located upstream of the heat exchanger (20) of the domestic hot water production unit (18), for producing domestic hot water without starting the absorption cycle of the device (1).

10. Device according to any one of claims 1 to 8, **characterised in that** it includes a domestic hot water production unit (18) and a selection valve (21) for supplying towards the heating circuit (C) and/or towards the domestic hot water production unit (18), and **in that** it further includes an additional gas boiler generator, located upstream of the selection valve (21), for producing heat and/or domestic hot water without starting the absorption cycle of the device (1).

11. Device according to any one of the preceding claims, **characterised in that** it includes a domestic hot water production unit (18) without storage, including a plate heat exchanger (22) and a thermostatic mixing valve (23).
